# EUROPÄISCHE PATENTSCHRIFT

(11) **EP 0 503 468 B1**
(45) Veröffentlichungstag und Bekanntmachung des Hinweises auf die Patenterteilung: **12.04.1995**
(21) Anmeldenummer: 92103730.5
(22) Anmeldetag: 05.03.1992
(51) Int. Cl.: A01D 45/02, A01D 41/14

(54) **Schneidwerk für Mähdrescher**
Cutting device for combine harvester
Dispositif de coupe pour moissonneuse-batteuse

(30) Priorität: 15.03.1991 DE 4108494
(43) Veröffentlichungstag der Anmeldung: 16.09.1992
(73) Patentinhaber: SAME S.p.A., I-24047 Treviglio (Bergamo) (IT)
(72) Erfinder: Von Allwörden, Wilhelm, Dipl.-Ing., W-7704 Gailingen (DE)
(74) Vertreter: Nau, Walter, Dipl.-Ing.

(56) Entgegenhaltungen:
- DE-A- 3 115 723
- DE-A- 3 616 717
- DE-A- 3 918 393
- US-A- 4 148 175

## Beschreibung

Die Erfindung betrifft ein Mähdrescher-Schneidwerk für die Ernte von Sonderfrüchten gemäß dem Oberbegriff des Anspruchs 1.

Der Einsatz von Mähdreschern zur Ernte von Sonderfrüchten wie Mais und Sonnenblumen mit einem gewöhnlichen Getreideschneidwerk hat sich nicht bewährt, da bestimmte unveränderliche Abmessungen dieses Schneidwerks, zum Beispiel die Aufnahmetischlänge und der Haspeldurchmesser, nicht der großen Wuchshöhe von Sonderfrüchten angepaßt sind. Zur Verbesserung des Ernteergebnisses von Sonderfrüchten sind daher Umbausätze beziehungsweise Vorbausätze für Schneidwerke entwickelt worden, die jeweils für eine Sonderfrucht wie Mais, Sonnenblumen und weitere bestimmt sind. Diese Schneidwerke werden gegen das normale Getreideschneidwerk ausgewechselt. Die Benutzung eines speziellen Schneidwerks für jede Sonderfrucht verursacht hohe Investitionskosten für den Betreiber eines Mähdreschers mit der Folge, daß sich die Rentabilität des Mähdreschers verringert, insbesondere wenn der Anteil von zu erntenden Sonderfrüchten gering ist.

Aus der gattungsbildenden US-A-4,148,175 ist eine Erntemaschine, insbesondere Mähdrescher, mit einem Fahrzeugrahmen und Einrichtungen zum Mähen und Dreschen von Halmgut, vorzugsweise für Sonderfrüchte wie Mais und Sonnenblumen, versehen mit einem quer zur Fahrtrichtung ausgerichteten, vertikal verstellbaren Schneidwerk, das zumindest ein Mähorgan, ein Einzugsorgan und ein Förderorgan, die jeweils achsparallel einander zugeordnet sind, sowie als Schiffe ausgebildete Teileinrichtungen für das in Reihen stehende Halmgut aufweist, bekannt. Außer dem Mähorgan, dem Einzugsorgan und dem Förderorgan sind keine weiteren Organe zum Niederdrücken des Halmgutes vorhanden.

Der Erfindung liegt daher die Aufgabe zugrunde, ein Schneidwerk für verschiedene Sonderfrüchte, insbesondere Mais und Sonnenblumen darzustellen, mit dem diese Früchte verlustfrei geerntet werden, wobei das Schneidwerk einen einfachen, kostengünstigen, wirkungsvollen Aufbau aufweist.

Erfindungsgemäß ist im Bereich des Schneidwerkes eine Welle oberhalb des Mähorganes und in einem Bereich zwischen den vorderen Spitzen der Schiffe und des als Einzugswalze ausgebildeten Einzugsorgans sowie achsparallel zu der Einzugswalze angeordnet. Diese dem Mähorgan über die gesamte Breite oberhalb vorgelagerte Welle bewirkt beim Ernteeinsatz, daß die hochwüchsigen Pflanzen wie Mais und Sonnenblumen in Fahrtrichtung des Mähdreschers gesehen nach vorn gedrückt werden innerhalb der dem Mähorgan vorgelagerten, den Stengel der Sonderfrucht führenden Schiffe. In Verbindung mit dem beim Ernteeinsatz angehobenen Schneidwerk gelangen die Stengel unterhalb der Frucht in das Mähorgan, wodurch vorteilhaft ausschließlich die Frucht in den Mähdrescher gelangt und damit die Dreschorgane nicht nachteilig mit einem hohen Masseanteil beaufschlagt werden, der die Arbeitsgeschwindigkeit des Mähdreschers stark beeinflußt.

Aus der US-PS 33 97 520 ist ein Fingerbalken-Mähwerk bekannt, dem oberhalb des Mähbalkens eine Welle vorgelagert ist, mit der das Halmgut nach vorn gedrückt wird. Diese Einrichtung soll eine gezielte Umlenkung des gemähten Halmgutes bewirken, mit der dieses einer dem Fingerbalken-Mähwerk nachgeschalteten Konditioniereinrichtung zugeführt wird. Die aus zwei horizontal angeordneten, gegenläufig angetriebenen Quetschwalzen bestehende Konditioniereinrichtung dient zur Aufbereitung des Halmgutes und damit zur Beschleunigung des Trocknungsvorgangs für das auf den Boden abgelegte Halmgut. Diese bekannte Einrichtung nimmt Einfluß auf das in seiner gesamten Länge gemähte Gut, damit dieses mit der Schnittfläche voraus in den Konditionierer gelangt. Dagegen ist der US-PS keinerlei Hinweis zu entnehmen, das Halmgut dem Mähorgan so zuzuführen, damit nur Teilbereiche des Halmguts vom Mähorgan erfaßt werden. Dem bekannten Fingerbalken-Mähwerk, dessen Aufgabe darin besteht, das Halmgut über seine gesamte Länge abzumähen und es anschließend aufzubereiten, ist damit nicht vergleichbar mit der Aufgabenstellung eines Mähdreschers zur Ernte von Sonderfrüchten, mit dem vorzugsweise die Frucht einer hochwüchsigen Pflanze zu ernten ist.

In einer Ausgestaltung des erfindungsgemäßen Schneidwerkes wird die Wirkung der dem Mähorgan vorgeschalteten Welle dadurch verstärkt, daß die Einzugswalze achsparallel in einem Bereich zwischen der Welle und dem Mähorgan angeordnet ist. Die Einzugswalze dient zur Erfassung der Sonderfrucht im Bereich der Schiffe bzw. zur Weiterbildung der von den Stengeln abgetrennten Früchte auf dem Aufnahmetisch des Schneidwerkes. Die Welle und Einzugswalze sind vorteilhaft dem Mähorgan höhengestuft vorgelagert.

Erfindungsgemäß ist weiter in einem Bereich unter dem Mähorgan zu diesem achsparallel und nach hinten versetzt eine Umlenkwelle angeordnet, die sich ebenfalls über die gesamte Schneidwerkbreite erstreckt. Die Walze bewirkt ein Herausziehen der Pflanzenstengel aus dem Mähorgan und drückt diese auf den Boden und verhindert damit gleichfalls ein Verstopfen von Einrichtungen am Schneidwerk, insbesondere ein Zusetzen des Mähorgans.

Der Aufbau des erfindungsgemäßen Schneidwerks sieht vorteilhaft einen Antrieb der Welle, der Einzugswalze und der Umlenkwelle vor. Damit wird das Niederdrücken der Pflanze, die Weiterleitung der vom Stengel abgetrennten Frucht auf dem Aufnahmetisch sowie das Herausziehen der Stengel aus dem Mähorgan verstärkt durch eine gegenseitige Unterstützung der einzelnen Bauteile. Vorzugsweise ist ein für alle Bauteile gleichsinniger Antrieb vorgesehen, dessen Drehrichtung mit der einer Einzugsschnecke übereinstimmt. Alternativ bietet es sich auch an, die Welle und die Umlenkwelle gegensinnig zur Einzugswalze anzutreiben.

Die Wirkung der Einzugswalze ist weiter zu verbessern durch gesteuerte Mitnehmer, zum Beispiel in Form von Zinken, die einen Exzenterantrieb aufweisen. Die Anordnung der Zinken in bzw. auf der Einzugswalze ist dabei vorteilhaft übereinstimmend mit den Einzugsschlitzen zwischen den Schiffen. Damit kann eine gezielte Weiterleitung des von den Schiffen geführten Erntegutes erfolgen.

Den Effekt der Umlenkwelle vergrößernd ist diese mit Abstreifern versehen zum wirkungsvollen Herausziehen der Pflanzenstengel aus dem Mähorgan. Dazu sind vorteilhaft um 180° auf der Umlenkwelle versetzt angeordnete Abstreifer vorgesehen, jeweils im Bereich der Einzugsschlitze zwischen den Schiffen, um so intermittierend auf die Pflanzenstengel wirken zu können.

Ein in Versuchen erprobter Aufbau des erfindungsgemäßen Schneidwerks sieht vor, daß der Mittelpunkt der Einzugswalze und der Welle unter einem Winkel von ca. 45° zu einer waagerechten Linie ausgehend vom Mähorgan verläuft und der Achsabstand zwischen Einzugswalze und der Welle übereinstimmend ist mit dem Abstand zwischen dem Mähorgan und der Einzugswalze.

Alternativ zu dem zuvor beschriebenen Aufbau des erfindungsgemäßen Schneidwerks kann dieses anstelle einer Einzugswalze mit einer herkömmlichen, für Getreideschneidwerke verwendeten Haspel ausgerüstet werden.

Die Einrichtung sieht weiter die Einbeziehung des Tragrahmens zur Unterstützung der Umlenkfunktion der Welle auf die hochwüchsigen Sonderfrüchte vor. Der bei Getreide-Schneidwerken zur Lagerung der Haspel dienende Tragrahmen, der für die Sonderfruchternte mit einer Querverbindung versehen ist, kann stufenlos vertikal verstellt und damit an die Pflanzenhöhe der Sonderfrüchte angepaßt werden.

Zur Darstellung eines kostengünstigen Schneidwerkes für Sonderfrüchte ist erfindungsgemäß vorgesehen, dieses als Vorsatz mit einem Getreideschneidwerk zu kombinieren. Die wesentlichen Bauteile des Standard-Schneidwerks wie Förderkanal, Aufnahmetisch, Einzugsschnecke, Mähorgan und Tragrahmen werden ergänzt durch einen Vorsatz, der hauptsächlich aus den Bauteilen Einzugswalze, Welle, den Schiffen, der Umlenkwelle und den beiden Seitenbegrenzungen gebildet wird.

Ein Ausführungsbeispiel, das zur weiteren Erläuterung der Erfindung beiträgt, ist den Zeichnungen sowie der anschließenden Figurenbeschreibung entnehmbar.

Es zeigt:
- Fig.1:: in einer Seitenansicht den Aufbau des erfindungsgemäßen Mähdrescher-Schneidwerks für Sonderfrüchte,
- Fig.2 bis Fig.5:: in einer Folgedarstellung die Arbeitsweise des erfindungsgemäßen Schneidwerks,
- Fig.6:: das Schneidwerk gemäß Fig.1 in einer Draufsicht.

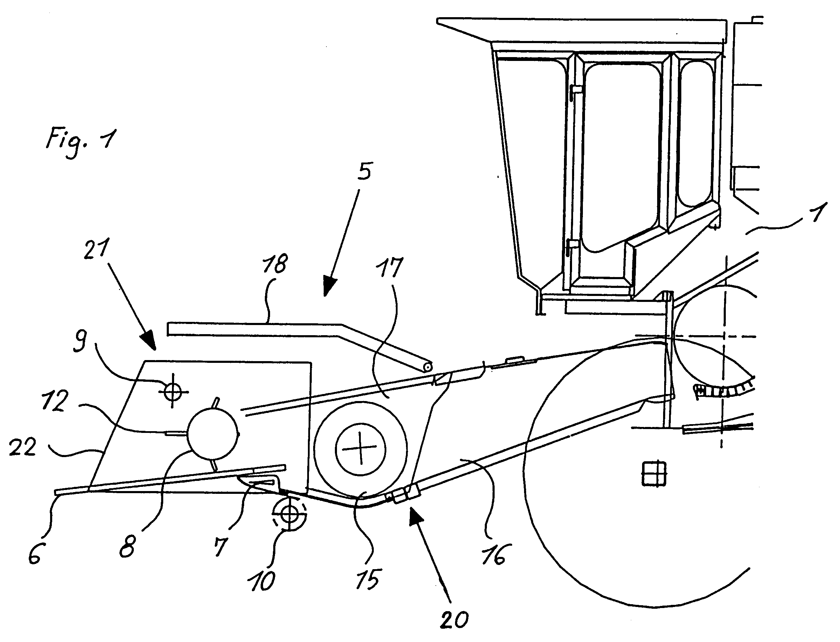

In Fig.1 sind alle wesentlichen Bauteile des erfindungsgemäßen Schneidwerks 5 dargestellt, welches an einem Mähdrescher 1 angebaut ist, von dem die Fahrerkabine und die Vorderachse gezeichnet sind. Das Schneidwerk 5 ist am Mähdrescher 1 beweglich gelagert und über hydraulische Einrichtungen, die in Fig.1 nicht dargestellt sind, vertikal, stufenlos verstellbar insbesondere zur Höhenanpassung des Schneidwerks an die zu erntende Frucht.

Der Aufbau des Schneidwerks 5 sieht ein Mähorgan 7 vor, mit dem Halm oder Stengel des Ernteguts geschnitten wird. Zur gezielten Zuführung der hochwüchsigen Sonderfrüchte sind Teilvorrichtungen in Form von Schiffen 6 dem Mähorgan 7 zugeordnet. Oberhalb der Schiffe 6 und des Mährogans 7 sind die Bauteile Einzugswalze 8 und Welle 9 auf einer unter einem Winkel von 45° zum Mähorgan 7 liegenden Achse höhengestuft angeordnet. Unterhalb des Mähorgans 7 und diesem nachgeordnet ist die Umlenkwelle 10 angeordnet. Das zu erntende Gut wird von der Einzugswalze 8, unterstützt durch die Mitnehmer 12, dem Mähorgan 7 zugeführt und anschließend an die nachgeordnete Einzugsschnecke 15 weitergeleitet. Übereinstimmend mit der Länge der Welle 9 und der Umlenkwelle 10 erstreckt sich die Länge der Einzugswalze über die gesamte Schnittbreite des Schneidwerks 5. Die Einzugsschnecke hat die Aufgabe, das über die gesamte Breite zugeführte Erntegut in den Mittenbereich des Schneidwerks 5 zu fördern in Richtung des im Vergleich zur Schneidwerksbreite schmale ausgebildeten Förderkanals 16 zu leiten, in dem über geeignete Fördereinrichtungen wie beispielsweise Kettenförderer das Erntegut dem Dreschorgan des Mähdreschers 1 zugeführt werden kann. Der Aufbau sieht einen Antrieb der Einzugswalze 8 der Welle 9, der Umlenkwelle 10 sowie der Einzugsschnecke 15 vor, mit dem eine gleichsinnige Drehrichtung erreichbar ist, die mit der Drehrichtung der Laufräder des Mähdreschers im Ernteeinsatz übereinstimmt. Alternativ sieht die Erfindung einen zu den übrigen Bauteilen gegensinnigen Antrieb für die Welle 9 und die Umlenkwelle 10 vor sowie einen Antrieb, der variable beziehungsweise einstellbare Drehzahlen der einzelnen Bauteile gewährleistet. Das Schneidwerk 5 kann als Einheit ausgebildet werden wie auch durch Kombination eines herkömmlichen Getreideschneidwerks einen Standardteil 20 mit einem Vorsatz 21. Das Standardteil 20 weist dabei die Bauteile Förderkanal 16, Einzugsschnecke 15, Aufnahmetisch 17, Mähorgan 7, sowie den Tragrahmen 18 auf, der bei Getreideschneidwerken zur Lagerung einer Haspel dient. Der Vorsatz 21 setzt sich zusammen aus den beiden Seitenbegrenzungen 22, in denen sowohl die Welle 9, Umlenkwelle 10 als auch die Einzugswalze 8 gelagert sind und mehrere vor dem Mähorgan 7 angeordnete Schiffe 6.

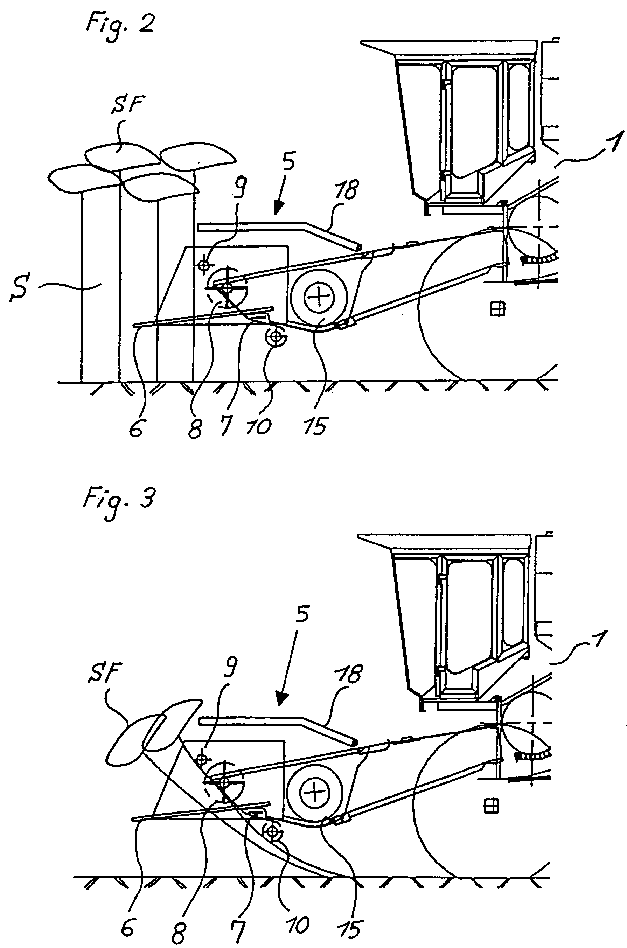

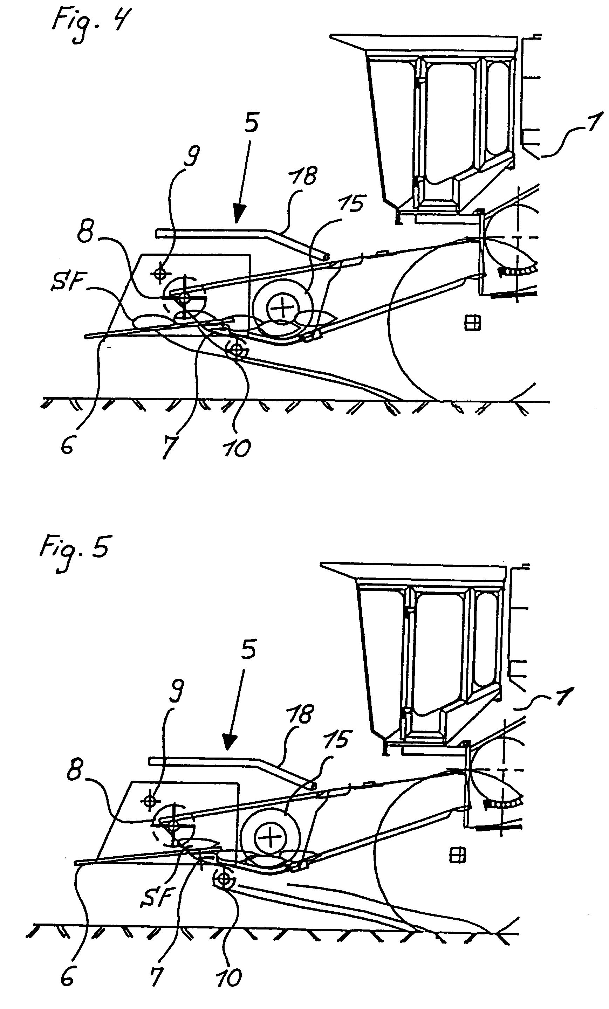

Aus den Figuren 2 bis 5 ist in Folgedarstellungen der Mähvorgang von Sonderfrüchten zu entnehmen, ausgehend von dem noch auf dem Halm stehenden Erntegut (Fig.2) bis zum Trennen der Frucht vom Halm bzw. Stengel (s. Fig.5). Den Beginn eines Erntevorgangs von Sonderfrüchten, gekennzeichnet mit den Buchstaben S, zeigt die Fig.2. Die Sonderfrüchte sind aufrechtstehend, wobei diese sich teilweise in den Einzugsschlitzen der Schiffe 6 befinden. Die ersten Sonderfrüchte befinden sich dabei unmittelbar vor dem freien Ende des Tragrahmens 18, dessen Aufgabe darin besteht, ein Umknicken der Sonderfrucht beim Erntevorgang in Richtung der Fahrerkabine des Mähdreschers 1 zu verhindern. Die Figur 3 zeigt den in den Bestand der Sonderfrüchte weiter eingefahrenen Mähdrescher 1, wodurch die Stengel der Sonderfrüchte in Fahrtrichtung nach unten gedrückt werden. Die Stengel legen sich dabei an die Welle 9 sowie an die Umlenkwelle 10 an. Die Fig.4 verdeutlicht die Wirkungsweise des erfindungsgemäßen Schneidwerks 5, mit dem vorteilhaft lediglich die Früchte geerntet werden. Der im Vergleich zur Fig.3 sich weiter fortbewegte Mähdrescher 1 bewirkt ein Durchgleiten der Stengel der Sonderfrucht S im Einzugsschlitz der Schiffe 6 bis zum Fruchtansatz FS der Sonderfrucht. Anschließend erfolgt gezielt durch die Einzugswalze 8 unterstützt durch deren Mitnehmer 12 eine Weiterleitung des Fruchtansatzes zum Mähorgan 7. Der einen großen Massenanteil darstellende Stengel der Sonderfrucht beaufschlagt so nicht nachteilig die Dreschorgane des Mähdreschers und bewirkt gleichzeitig eine verbesserte Qualität des Erntegutes. Die Wirkung der Umlenkwelle 10 verdeutlicht die Fig.5. In dieser Mähdrescherstellung ist bereits das Abtrennen des Fruchtansatzes FS der Sonderfrucht durch das Mähorgan 7 erfolgt und die langen Stengel der Sonderfrucht S werden mit Hilfe der Umlenkwelle 10 aus dem Mähorgan 7 gezogen und in Richtung des Bodens gedrückt zur Vermeidung eines Verstopfens des Mähorgans 7 beziehungsweise anderer Bauteile des Schneidwerks 5, zum Beispiel Antriebsketten oder rotierende Wellen.

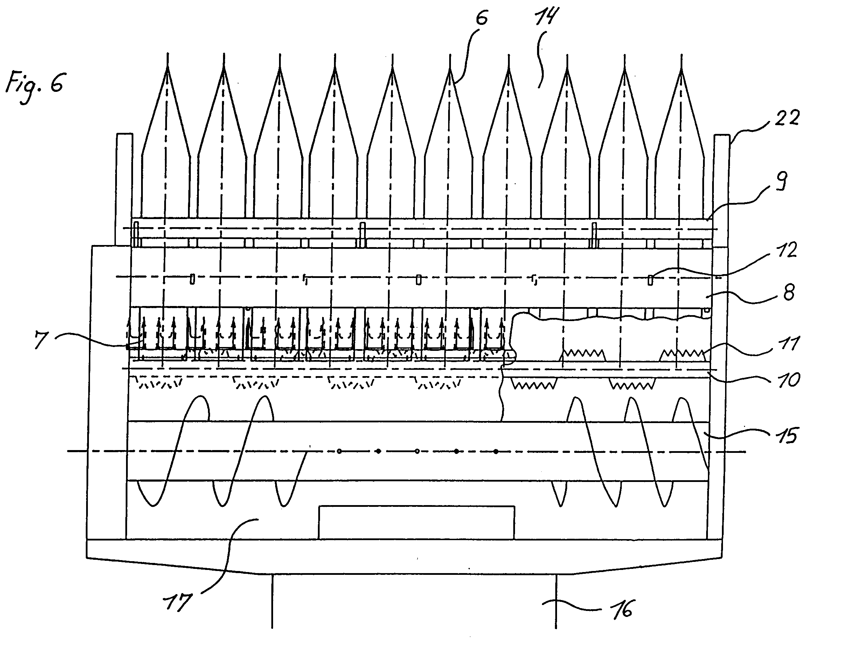

Die Wirkungsweise der einzelnen Bauteile des erfindungsgemäßen Schneidwerks 5 wird weiter durch die Draufsicht gemäß Fig.6 verdeutlicht. Dem Mähorgan 7 sind in Fahrtrichtung die Schiffe 6 vorgelagert, die jeweils in einem Abstand zueinander, einen Einzugsschlitz 14 bildend, angeordnet sind. Der Teilungsabstand der Schiffe 6 entspricht dem Abstand der in Reihen angepflanzten Sonderfrüche wie Sonnenblumen und Mais. Die zu erntende Sonderfrucht S wird in dem erfindungsgemäßen Schneidwerk 5 zunächst im Einzugsschlitz 14 geführt und anschließend durch die Welle 9 in Fahrtrichtung nach unten gedrückt. Wie bereits ausgeführt gleitet die Sonderfrucht mit ihrem Stengel bis zum Fruchtansatz FS durch den Einzugsschlitz 14 und wird dann von den Mitnehmern 12 der Einzugswalze 8 zum Mähorgan 7 gefördert, in dem der Fruchtansatz vom Stengel getrennt wird. Durch die dem Mähorgan 7 nachgeschaltete Einzugsschnecke 15 wird das Mähgut zunächst in den Mittenbereich vom Aufnahmetisch 17 gefördert und von dort in den Förderkanal 16 weitergeleitet, durch den das Mähgut der Drehscheinrichtung zugeführt wird. Durch eine teilweise Detailansicht wird die Einbaulage der Umlenkwelle 10 unterhalb des Mähorgans 7 deutlich, die mit Abstreifern 11 versehen ist. Übereinstimmend mit den Mitnehmern 12 der Einzugswalze 8, die jeweils in den Einzugsschlitz 14 eingreifen, sind die Abstreifer 11 auf der Umlenkwelle 10 ebenfalls den Bereich der Einzugsschlitze 14 überdeckend angeordnet. Aus Fig.6 wird weiter die Lagerung der Einzugswalze 8, der Welle 9 sowie der Umlenkwelle 10 in den Seitenbegrenzungen 22 des Schneidwerks 5 deutlich.

## Patentansprüche

1. Erntemaschine, insbesondere Mähdrescher, mit einem Fahrzeugrahmen und Einrichtungen zum Mähen und Dreschen von Halmgut, vorzugsweise für Sonderfrüchte wie Mais und Sonnenblumen, versehen mit einem quer zur Fahrtrichtung ausgerichteten, vertikal verstellbaren Schneidwerk (5), das zumindest ein Mähorgan (7), ein Einzugsorgan (8) und ein Förderorgan (15), die jeweils achsparallel einander zugeordnet sind, sowie als Schiffe (6) ausgebildete Teileinrichtungen für das in Reihen stehende Halmgut aufweist,
*dadurch gekennzeichnet*, daß im Bereich des Schneidwerkes (5) eine Welle (9) oberhalb des Mähorganes (7) und in einem Bereich zwischen den vorderen Spitzen der Schiffe (6) und des als Einzugswalze (8) ausgebildeten Einzugsorgans sowie achsparallel zu der Einzugswalze (8) angeordnet ist.

2. Erntemaschine nach Anspruch 1,
*dadurch gekennzeichnet*, daß die Einzugswalze (8) achsparallel in einem Bereich zwischen der Welle (9) und dem Mähorgan (7) angeordnet ist.

3. Erntemaschine nach Anspruch 1 oder 2,
*dadurch gekennzeichnet*, daß in einem Bereich unter dem Mähorgan (7) zu diesem achsparallel und nach hinten versetzt eine Umlenkwelle (10) angeordnet ist.

4. Erntemaschine nach einem der vorhergehenden Ansprüche,
*dadurch gekennzeichnet*, daß die Welle (9), die Einzugswalze (8) und die Umlenkwelle (10) angetrieben sind.

5. Erntemaschine nach einem der vorhergehenden Ansprüche,
*dadurch gekennzeichnet*, daß die Welle (9), die Einzugswalze (8) und die Umlenkwelle (10) gleichsinnig mit der Einzugsschnecke (15) angetrieben sind.

6. Erntemaschine nach einem der vorhergehenden Ansprüche,
*dadurch gekennzeichnet*, daß die Einzugswalze (8) Mitnehmer (12) aufweist, die jeweils übereinstimmend in einem Bereich eines Einzugsschlitzes (14) angeordnet sind, der durch die mit Abstand zueinander angebrachten Schiffe gebildet ist.

7. Erntemaschine nach einem der vorhergehenden Ansprüche,
*dadurch gekennzeichnet*, daß auf der Umlenkwelle (10) je zueinander versetzt angebrachte Abstreifer (11) derart angeordnet sind, daß die Abstreifer (11) jeweils einen Bereich wenigstens in der Breite des Einzugsschlitzes (14) während einer Umdrehung der Umlenkwelle (10) überdecken.

8. Erntemaschine nach einem der vorhergehenden Ansprüche,
*dadurch gekennzeichnet*, daß die Einzugswalze (8) und die Welle (9) in einer unter ca. 45° verlaufenden Ebene, ausgehend von dem Mähorgan (7), angeordnet sind, wobei der Achsabstand zwischen der Einzugswalze (8) und der Welle (9) mit dem Abstand zwischen dem Mähorgan (7) und der Einzugswalze (8) übereinstimmt.

9. Erntemaschine nach einem der vorhergehenden Ansprüche,
*dadurch gekennzeichnet*, daß die Einzugswalze (8) als Haspel ausgebildet ist.

10. Erntemaschine nach einem der vorhergehenden Ansprüche,
*dadurch gekennzeichnet*, daß ein oberhalb der Welle (9) angeordneter und dieser vorgelagerter, vertikal verstellbarer Tragrahmen (18) vorgesehen ist.

11. Erntemaschine nach einem der vorhergehenden Ansprüche,
*dadurch gekennzeichnet*, daß das Schneidwerk (5) ein Standardteil (20) aufweist, welches die Bauteile Förderkanal (16), Aufnahmetisch (17), Einzugsschnecke (15), Mähorgan (7) und den Tragrahmen (18) aufweist, und einen Vorsatz (21) aufweist, der die Einzugswalze (8), die Welle (9), die Schiffe (6), die Umlenkwelle (10) und Seitenbegrenzungen (22) aufweist.

## Claims

1. A harvesting machine, especially a combine harvester, comprising a chassis and means for reaping and threshing cereal material, preferably for special crops such as maize and sunflowers, the machine comprising a vertically-adjustable cutting mechanism (5) aligned transversely to the direction of the vehicle and comprising at least one reaping means (7), a collecting means (8) and a conveying means (15) disposed with their axes parallel to one another, and boat-shaped components (6) for dividing the rows of cereal material, characterised in that, in the neighbourhood of the cutting mechanism (5), a shaft (9) is disposed above the reaping means (7) in a region between the front tips of the boats (6) and the collecting means, which is in the form of a collecting roller (8), with its axis parallel to that of the collecting roller (8).

2. A harvesting machine according to claim 1, characterised in that the collecting roller (8) is disposed at a place between the shaft (9) and the reaping means (7) and is parallel to the axes thereof.

3. A harvesting machine according to claim 1 or 2, characterised in that a guide shaft (10) is disposed at a place under the reaping means (7), and is parallel to the axis thereof and offset to the rear.

4. A harvesting machine according to any preceding claim, characterised in that the shaft (9), the collecting roller (8) and the guide roller (10) are driven.

5. A harvesting machine according to any preceding claim, characterised in that the shaft (9), the collecting roller (8) and the guide roller (10) are driven in the same direction as the collecting screw (15).

6. A harvesting machine according to any preceding claim, characterised in that the collecting roller (8) comprises drivers (12) which are disposed in identical manner in a region of a collecting slot (14) formed by the spaced-apart boats.

7. A harvesting machine according to any preceding claim, characterised in that strippers (11) offset from one another are disposed on the guide shaft (10) so that each stripper (11) covers at least one region across the collecting slot (14) during each rotation of the guide shaft (10).

8. A harvesting machine according to any preceding claim, characterised in that the collecting roller (8) and the shaft (9) are disposed in a plane at about 45° starting from the reaping means (7), the axial distance between the collecting roller (8) and the shaft (9) coinciding with the distance between the reaping means (7) and the collecting roller (8).

9. A harvesting machine according to any preceding claim, characterised in that the collecting roller (8) is a winch.

10. A harvesting machine according to any preceding claim, characterised in that a vertically-adjustable bearing frame (18) is disposed above, and in front of, the shaft (9).

11. A harvesting machine according to any preceding claim, characterised in that the cutting mechanism (5) comprises a standard part (20) containing the conveying channel (16), the receiving table (17), the collecting screw (15), the reaping means (7) and the bearing frame (18), and also comprises a front part (21) comprising the collecting roller (8), the shaft (9), the boats (6), the guide shaft (10) and side walls (22).

## Revendications

1. Machine de récolte notamment moissonneuse-batteuse comportant un châssis et des installations pour faucher et battre des produits en tiges notamment des produits particuliers comme du mais ou du tournesol, avec un dispositif de coupe (5) réglable verticalement, aligné transversalement par rapport à la direction de déplacement, et qui comporte au moins un organe de fauche (7), un organe d'entrée (8) et un organe de transfert (15), ces différents organes étant d'axe parallèle, ainsi que des navettes (6) formant des dispositifs séparateurs pour le produit en tige planté en rangées, machine caractérisée en ce qu'au niveau du dispositif de coupe (5) est disposé un axe (9) au-dessus de l'organe de fauche (7) et au niveau entre les pointes de la navette (6) et de l'organe d'entrée comme organe d'entrée réalisé comme un cylindre d'entrée (8), d'axe parallèle à celui-ci.

2. Machine selon la revendication 1, caractérisée en ce que le cylindre d'entrée (8) est monté d'axe parallèle dans une zone comprise entre l'axe (9) et l'organe de fauche (7).

3. Machine selon la revendication 1 ou 2, caractérisée en ce que dans une zone en dessous de l'organe de fauche (7), il y a un axe de renvoi (10) parallèle et décalé derrière l'organe de fauche.

4. Machine selon l'une des revendications précédentes, caractérisée en ce que l'axe (9), le cylindre d'entrée (8) et l'axe de renvoi (10) sont entraînés par un moteur.

5. Machine selon l'une des revendications précédentes, caractérisée en ce que l'axe (9), le cylindre d'entrée (8) et l'axe de renvoi (10) sont entraînés dans le même sens que la vis d'entrée (15).

6. Machine selon l'une des revendications précédentes, caractérisée en ce que le cylindre d'entrée (8) comporte des organes d'entraînement (12) qui sont disposés en concordance avec chaque fois une zone d'une fente d'entrée (14) formée par les navettes écartées les unes des autres.

7. Machine selon l'une des revendications précédentes, caractérisée en ce que l'axe de renvoi (9) porte des racleurs (11) montés décalés de manière que les racleurs (11) recouvrent chaque fois une zone correspondant au moins à la largeur de la fente d'entrée (14) pendant une rotation de l'axe de renvoi (10).

8. Machine selon l'une des revendications précédentes, caractérisée en ce que le cylindre d'entrée (8) et l'axe (9) sont disposés dans un plan faisant environ 45° à partir de l'organe de fauche (7), l'entraxe entre le cylindre d'entrée (8) et l'axe (9) correspondant à l'écartement entre l'organe de fauche (7) et le cylindre d'entrée (8).

9. Machine selon l'une des revendications précédentes, caractérisée en ce que le cylindre d'entrée (8) est un rabatteur.

10. Machine selon l'une des revendications précédentes, caractérisée par un châssis de support (18) réglable verticalement, prévu au-dessus de l'axe (9) et en avant de celui-ci.

11. Machine selon l'une des revendications précédentes, caractérisée en ce que le dispositif de coupe (5) comporte une partie normalisée (20) comprenant le canal de transfert (16), la table de réception (17), la vis d'entrée (15), l'organe de fauche (7) et le châssis (18) ainsi qu'un accessoire (21) comprenant le cylindre d'entrée (8), l'axe (9), les navettes (6), l'axe de renvoi (10) et les parois de limitation latérale (22).
